# EUROPÄISCHE PATENTSCHRIFT

(11) **EP 0 657 583 B1**
(45) Veröffentlichungstag und Bekanntmachung des Hinweises auf die Patenterteilung: **17.03.1999**
(21) Anmeldenummer: 93119745.3
(22) Anmeldetag: 08.12.1993
(51) Int. Cl.: E01C 5/00

(54) **Plattenförmiger Pflasterstein, insbesondere aus Beton**
Plate-like paving stone particularly of concrete
Pavé en forme de dalle, en particulier en béton

(43) Veröffentlichungstag der Anmeldung: 14.06.1995
(73) Patentinhaber: Geiger, Peter, D-92318 Neumarkt (DE)
(72) Erfinder: Geiger, Peter, D-92318 Neumarkt (DE)
(74) Vertreter: Göbel, Matthias, Dipl.-Ing.

(56) Entgegenhaltungen:
- DE-U- 1 885 530
- DE-U- 7 912 656
- DE-U- 8 707 649
- DE-U- 9 111 552
- US-A- 1 379 440
- BETONWERK + FERTIGTEIL TECHNIK, Bd.50, Nr.3, 1984, WIESBADEN DE Seite 164

## Beschreibung

Die Erfindung betrifft einen plattenförmigen Pflasterstein, insbesondere aus Beton, mit im Verwendungszustand senkrechten Seitenflächen.

Es sind plattenförmige Betonsteine (DE-U-87 17 484) bekannt, die an den Seitenflächen mit Stegen versehen sind. Den Stegen kommt die Aufgabe zu, beim Verlegen der Betonsteine zwischen benachbarten Betonsteinen Fugen zu bilden, über die Niederschlagwasser in den Unterboden versickern kann. Es hat sich jedoch gezeigt, daß die Stege ein Kippen der Betonsteine bei großen Belastungen, z.B. bei Befahren mittels Kraftfahrzeugen zulassen und zu einem instabilen Belag führen, wobei die Größe der Instabilität von der waagrechten Länge der Stege abhängig ist.

DE-U-9 111 552 zeigt einen Pflasterstein zum Abführen von Regenwasser, mit einer, der Form des Steins entsprechend, gewissen Durchlässigkeit im Verlegemuster.

Es ist Aufgabe der Erfindung einen Betonstein zu schaffen, der einen stabilen Bodenbelag mit hoher Durchlässigkeit ergibt.

Der Erfindung gemäß wird diese Aufgabe durch die Merkmale des Anspruchs 1 gelöst.

Der so gebildete Betonstein erlaubt im Verlegemuster eine unmittelbare kippfreie Abstützung an benachbarten gleichen Betonsteinen und die Bildung von umlaufend eingefaßten Öffnungen zur behinderungsfreien Abführung von Sickerwasser. Entsprechend dem Verlegemuster als Läuferverband oder Kreuzverband sind dabei Öffnungen mit verschiedenen Querschnittsgrößen bildbar, so daß eine Anpassung der zu erwartenden Durchlässigkeit gegeben ist. Es versteht sich, daß insbesondere bei Verlegung im Kreuzverband die beim Pflasterstein gebildeten großen Querschnitte für die Öffnungen durch Auffüllen der Öffnungen mit Erde der Pflasterstein auch als Rasenstein zum Einsatz kommen kann.

In Ausgestaltung des Pflastersteins ist vorgesehen, daß die trapezförmigen Einziehungen bevorzugt mit gleichen Querschnittsgrößen ausgebildet sind. Weiterhin ist vorgesehen, daß die in den Begrenzungsflächen der trapezförmigen Einziehungen und die mittig in den Seitenflächen angeordneten Einziehungen im wesentlichen einen dreiecksförmigen Querschnitt aufweisen. Es versteht sich, daß auch Abwandlungen hinsichtlich der Querschnittsform und der Querschnittsgröße denkbar sind. So ist z.B. möglich, die in den trapezförmigen Einziehungen und in den Seitenflächen ausgebildeten Öffnungen mit einem quadratischen oder rechteckförmigen Querschnitt zu versehen. Auch die Verwendung halbkreisförmiger Einziehungen für die Öffnungen ist denkbar.

Sollen geringe Abstände zwischen die benachbarten Pflastersteinen herbeigeführt werden, so können hierzu insbesondere die Seitenflächen in diagonalen Abschnitten und die Begrenzungsflächen der trapezförmigen Einziehungen zu beiden Seiten neben den Einziehungen senkrechte Abstandsleisten aufweisen. Es versteht sich, daß dabei die waagrechte Länge der Abstandsleisten zweckmäßig nur klein ausgebildet ist.

Schließlich ist noch vorgesehen, daß der Pflasterstein an seiner Oberseite schräg von oben und zu den Seitenflächen umlaufend sich erstreckende Abschrägungen (Phasen) geringer Höhe aufweist.

Die Erfindung ist anhand eines Ausführungsbeispiels in der Zeichnung erläutert. Es zeigen:
- Fig. 1: einen Pflasterstein in Draufsicht,
- Fig. 2: Pflastersteine im Kreuzverband,
- Fig. 3: Pflastersteine im Läuferverband und
- Fig. 4: einen Schnitt nach der Linie IV-IV der Fig. 1.

Der Pflasterstein 1 weist eine im wesentlichen rechteckige Grundform auf. In den beiden einander gegenüberliegenden Längsseiten 2 des Pflastersteins 1 sind im Querschnitt im wesentlichen trapezförmige Einziehungen 3 ausgebildet. Die Einziehungen 3 erstrecken sich dabei unter Bildung höckerartiger Abschnitte 4 im wesentlichen im Mittelabschnitt über eine Teillänge der Längsseiten. An den trapezförmigen Einziehungen 3 schließen sich im Bereich der einander zugenäherten Begrenzungsflächen weitere Einziehungen 5 an, die beim Ausführungsbeispiel eine dreieckförmige Querschnittsform aufweisen. Weiter sind in den Querseiten 6 mittig weitere Einziehungen 7 ausgebildet, die ebenfalls mit dreieckförmiger Querschnittsform ausgeführt sind und den Einziehungen 5 hinsichtlich der Querschnittsgröße entsprechen. Desweiteren ist der Pflasterstein 1 in den Eckbereichen mit Abschrägungen 8 und Abstandsleisten 9 versehen. Die Abstandsleisten 9 sind in den zugenäherten Begrenzungsflächen der trapezförmigen Einziehungen 3 neben den Einziehungen 5 bzw. in diagonalen Bereichen der Querseiten 6 angeordnet. Die Abstandsleisten 9 sind mit einer geringen waagrechten Länge ausgeführt, so daß beim Aneinanderfügen von Pflastersteinen der vorliegenden Art nur schmale Fugen gebildet werden. Schließlich ist der Pflasterstein 1 an seiner Oberseite mit schräg von oben zu den Seitenflächen sich erstreckenden umlaufenden Abschrägungen 10 mit geringer Höhe versehen. Die Abschrägungen 10 bilden Phasen, die im Verlegeverband des Pflastersteins 1 störende Überstände über die Oberseite verhindern.

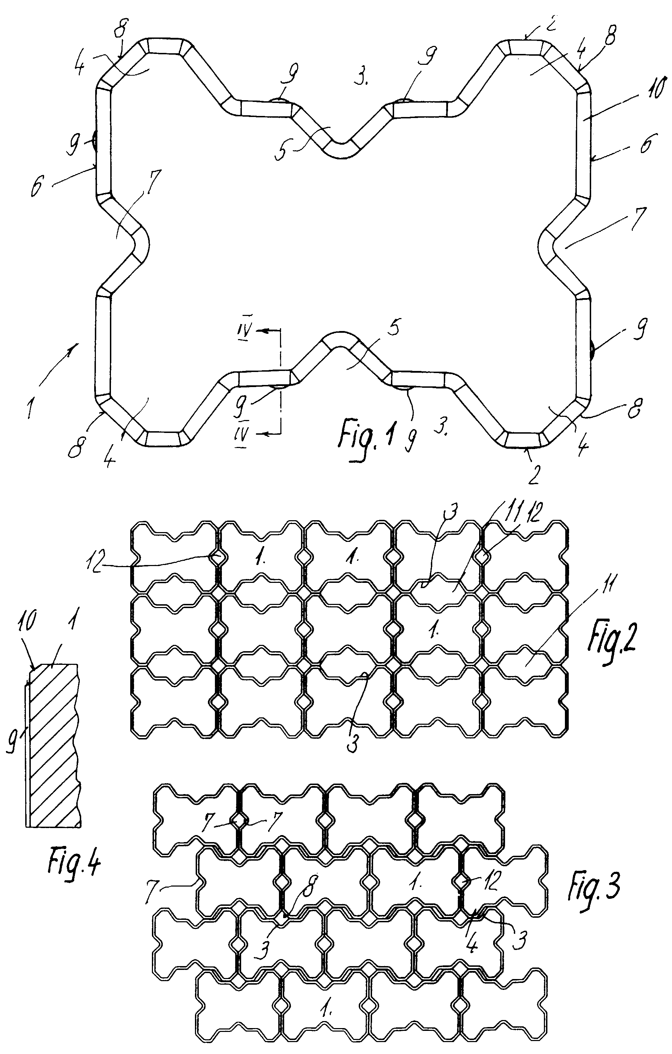

Die Fig. 2 zeigt Pflastersteine 1 im Kreuzverband. Hierbei kommen die Pflastersteine mit ihren höckerartigen Abschnitten unmittelbar miteinander zur Anlage. Die trapezförmigen Einziehungen 3 bilden im Kreuzverband relativ große Öffnungen 11, während die Einziehungen 7 in den Querseiten 6 bzw. die Abschrägungen 8 zusätzliche Öffnungen 12 mit geringerer Querschnittsgröße bilden. Der Kreuzverband insgesamt gibt den Vorteil, der Bildung relativ großer Öffnungen 11,12, wodurch ein besonders leichter und schneller Durchtritt von Sickerwasser od. dgl. in den Untergrund erfolgen kann. Außerdem ermöglichen die Öffnungen 11,12 ein Auffüllen mit Erde, wodurch der Pflasterstein 1 als Rasenstein mit großer Wasserdurchlässigkeit und sicherer Abstützung zur Anwendung kommen kann.

Die Fig. 3 zeigt Pflastersteine im Läuferverband. Bei dieser Verlegungsart greifen die höckerartigen Abschnitte 4 jeweils in die trapezförmigen Einziehungen 3 ein und ergeben damit eine innige Verzahnung benachbarter Pflastersteine 1. Der Verband eignet sich insbesondere für große Belastungen. Desweiteren bilden die in den Querseiten 6 ausgebildeten Einziehungen 7 benachbarter Pflastersteine miteinander und Einziehungen 3 mit Abschrägungen 8 Öffnungen 12, die gemeinsam dem sicheren Ableiten von Sickerwasser od.dgl. dienen.

## Patentansprüche

1. Plattenförmiger Pflasterstein, insbesondere aus Beton, mit im Verwendungszustand senkrechten Seitenflächen, wobei bei im Verwendungszustand horizontalen Querschnitt, in zwei einander gegenüberliegenden Seitenflächen (2) des Pflastersteins (1) im wesentlichen trapezförmige Einziehungen (3) ausgebildet sind, wobei die einander zugenäherten Begrenzungsflächen der trapezförmigen Einziehungen (3) in den Mittelbereichen eine weitere Einziehung (5) aufweisen, wobei mittig in den zu den besagten Seitenflächen des Pflastersteins quer erstreckenden Seitenflächen Einziehungen (7) ausgebildet sind und wobei in den Eckbereichen benachbarter Seitenflächen (2) des Pflastersteins (1) Abschrägungen (8) angeordnet sind.

2. Pflasterstein nach Anspruch 1, dadurch gekennzeichnet, daß die trapezförmigen Einziehungen (3) mit gleichen Querschnittsgrößen ausgebildet sind.

3. Pflasterstein nach Anspruch 1, dadurch gekennzeichnet, daß die in den Begrenzungsflächen der trapezförmigen Einziehungen (3) ausgebildeten Einziehungen (5) und die mittig in den Seitenflächen (6) angeordneten Einziehungen (7) im wesentlichen einen dreieckförmigen Querschnitt mit gleichen Querschnittsgrößen aufweisen.

4. Pflasterstein nach Anspruch 1, dadurch gekennzeichnet, daß die beiden Seitenflächen (6) in diagonalen Abschnitten und die Begrenzungsflächen der trapezförmigen Einziehungen (3) zu beiden Seiten neben den Einziehungen (5) senkrechte Abstandsleisten (9) aufweisen.

5. Pflasterstein nach Anspruch 1, dadurch gekennzeichnet, daß der Pflasterstein (1) an seiner Oberseite schräg von oben und zu den Seitenflächen (2,6) umlaufend sich erstreckende Abschrägungen (10) geringer Höhe aufweist.

## Claims

1. Tile-like paving stone, more especially formed from concrete, having lateral faces which are vertical in the position of use, wherein substantially trapezoidal recesses (3), which have a horizontal cross-section in the position of use, are provided in two oppositely situated lateral faces (2) of the paving stone (1), wherein the boundary faces of the trapezoidal recesses (3), which are brought close to one another, have an additional recess (5) in the central regions, wherein recesses (7) are provided centrally in the lateral faces which extend transversely relative to said lateral faces of the paving stone, and wherein inclined portions (8) are disposed in the corner regions of adjacent lateral faces (2) of the paving stone (1).

2. Paving stone according to claim 1, characterised in that the trapezoidal recesses (3) are configured with identical cross-sectional parameters.

3. Paving stone according to claim 1, characterised in that the recesses (5), which are provided in the boundary faces of the trapezoidal recesses (3), and the recesses (7), which are disposed centrally in the lateral faces (6), have substantially a triangular cross-section with identical cross-sectional parameters.

4. Paving stone according to claim 1, characterised in that the two lateral faces (6) have vertical spacer strips (9) in diagonal portions, and the boundary faces of the trapezoidal recesses (33) have vertical spacer strips (9) on both sides adjacent the recesses (5).

5. Paving stone according to claim 1, characterised in that the paving stone (1) has inclined portions (10) of minimal height which extend on its upper side inclinedly from above and circumferentially relative to the lateral faces (2,6).

## Revendications

1. Elément de pavement en forme de plaque, en particulier en béton, comportant des surfaces latérales verticales dans l'état d'utilisation, des renfoncements généralement trapézoïdaux (3) étant réalisés, dans le cas d'une section transversale horizontale dans l'état d'utilisation, dans deux surfaces latérales opposées l'une à l'autre (2) de l'élément de pavement (1), les surfaces de limitation voisines l'une de l'autre des renfoncements trapézoïdaux (3) présentant, dans les zones centrales, un autre renfoncement (5), des renfoncements (7) étant réalisés, de façon centrale, dans les surfaces latérales s'étendant transversalement auxdites surfaces latérales de l'élément de pavement, et des chanfreins (8) étant prévus dans les zones de coin de surfaces latérales voisines (2) de l'élément de pavement (1).

2. Elément de pavement selon la revendication 1,
caractérisé en ce que les renfoncements trapézoïdaux (3) sont réalisés en ayant des dimensions de section transversale identiques.

3. Elément de pavement selon la revendication 1,
caractérisé en ce que les renfoncements (5) réalisés dans les surfaces de limitation des renfoncements trapézoïdaux (3) et les renfoncements (7) agencés de façon centrale dans les surfaces latérales (6) présentent généralement une section transversale de forme triangulaire, ayant des dimensions de section transversale identiques.

4. Elément de pavement selon la revendication 1,
caractérisé en ce que les deux surfaces latérales (6), dans des tronçons diagonaux, et les surfaces de limitation des renfoncements trapézoïdaux (3), des deux côtés, à côté des renfoncements (5) présentent des entretoises verticales (9).

5. Elément de pavement selon la revendication 1,
caractérisé en ce que l'élément de pavement (1) présente des chanfreins (10) de faible hauteur, sur son dessus, s'étendant de façon inclinée vers le haut et en entourant les surfaces latérales (2,6).
